# EUROPÄISCHE PATENTSCHRIFT

(11) **EP 1 956 369 B1**
(45) Veröffentlichungstag und Bekanntmachung des Hinweises auf die Patenterteilung: **16.09.2015**
(21) Anmeldenummer: 08002287.4
(22) Anmeldetag: 07.02.2008
(51) Int. Cl.: G01N 27/401, C08F 220/28, C08F 220/56, C08F 230/08

(54) **Nano-Hybridgele auf Basis von umgeesterten Organosiloxanen als Polymer-Elektrolyte**
Nano hybrid gels as polymer electrolytes based on transesterified organosiloxanes
Gels nano-hybrides à base d'organosiloxanes transestérifiés en tant que polymères électrolytes

(30) Priorität: 08.02.2007 EP 07002739
(43) Veröffentlichungstag der Anmeldung: 13.08.2008
(73) Patentinhaber: Hamilton Bonaduz AG, 7402 Bonaduz (CH)
(72) Erfinder: Thrier, Rolf, 8317 Tagelswangen (CH); Züst, Christian, 3012 Bern (CH); Wüst, Dominik, 8200 Schaffhausen (CH); Bühler, Hannes, 8873 Amden (CH); Löbbert, Andreas, 7000 Chur (CH)
(74) Vertreter: RLTG

(56) Entgegenhaltungen:
- EP-A- 1 124 132
- EP-A- 1 560 019
- US-A1- 2003 059 682

## Beschreibung

Die Erfindung betrifft einen Polymerelektrolyten, der z.B. Bestandteil einer elektro-chemischen Referenzelektrode ist und bei potentiometrischen und amperometrischen Sensoren eingesetzt werden kann. Der Polymerelektrolyt umfasst ein Hydrogel, das über einen großen pH-Bereich stabil und gegenüber organischen Lösungsmitteln beständig ist. Zusätzlich ist dieses Hydrogel stabil bei erhöhten Temperaturen bis 200°C. Erzielt wird diese Temperaturstabilität durch Hybridisierung umgeesterter Organosiloxane mit siliziumfreien organischen Monomeren, die eine oder mehrere funktionelle, radikalisch vernetzbare Gruppen enthalten.

Elektrochemische Referenzelektroden in Kombination mit potentiometrischen und amperometrischen Elektroden zur Bestimmung z.B. des pH-Wertes sind bekannt. Meist werden sogenannte Einstabmessketten eingesetzt, bei denen die Referenzelektroden konzentrisch um die innere Messelektrode angeordnet ist. Eine Flüssigverbindung (Liquid Junction) sorgt für den elektrolytischen Kontakt zwischen dem Referenzelektrolyten im Inneren der Referenzelektrode und dem Messmedium. Der Referenzelektrolyt ist üblicherweise eine konzentrierte wässrige Lösung von Kaliumchlorid.

Im Patent US 4,959,138 wird ein Referenzelektrolyt aus Polyacrylamid eingesetzt, welcher jedoch in organischen Lösungsmitteln schrumpft und eine erhebliche Instabilität gegenüber hydrolytischen Angriffen, z.B. durch Säuren oder Basen, aufweist.

Im Patent EP 1 124 132 A1 wird ein acylamidfreies Hydrogel verwendet, dessen Monomere N,N-Dimethylacrylamid oder 2,3-Dihydroxypropylmethacrylat hydrolytisch wesentlich stabiler sind. Die Lösungsmittelstabilität wurde erreicht, indem die Hydrophilie des Polymers durch Copolymerisation mit hydrophoberen Monomeren der Messmediumpolarität angepasst wurde.

Bei Kontakt mit organischen Lösungsmitteln tauschen (wässrige) Polymergele mit angepasster Hydrophilie lediglich ihr Lösungsmittel aus und es entstehen Gele, welche organische Lösungsmittel als Quellmittel beinhalten, im Gegensatz zu sehr hydrophilen Gelen (z.B. Polyacrylamidgelen), welche mit organischen Lösungsmitteln nicht zu quellen vermögen und daher bei Kontakt mit letzteren kollabieren (schrumpfen).

Im Falle von Poly-N,N-dimethylacrylamid musste die Hydrophilie des Polymers kaum angepasst werden, da diese Gele in organischen Lösungsmittel mit Polaritäten größer als die von Azeton durchaus quellen und somit ohnehin nicht kollabieren. Bei Gelen, bestehend aus Poly-2,3-dihydroxypropylmethacrylat und hydrophileren Gelen kann die Hydrophilie durch Copolymerisation mit hydrophoberen Monomeren, wie Hydroxyethylmethacrylat an die Polarität des lösungsmittelhaltigen Messmediums angepasst werden.

In US2003/0183517 A1 wird ein weiteres hydrolytisch stabiles Monomer, nämlich 2-Hydroxy-3-amino(propyl)methacrylat und Isomerengemische davon als Bestandteil hydrolytisch stabiler und lösungsmittelstabiler Hydrogele in Referenzelektroden beschrieben, welches wiederum durch Copolymerisation z.B. mit Hydroxypropylmethacrylat lösungsmittelstabil gemacht wurde.

Weiterhin wurde in WO 2005/073704 N-Acrylaminoethoxyethanol als Hauptbestandteil hydrolytisch (sauer und basisch) besonders stabiler Hydrogele, eingesetzt als Festelektrolyte in Referenzelektroden, beschrieben.

All diese Gele sind rein organische Hydrogele und weisen die für organische Materialien typische tiefe Temperaturbeständigkeit auf. So vergilben und zersetzen sich Gele aus Poly-N,N-dimethylacrylamid bereits bei Temperaturen um 135°C-140°C. Weitere Gele, wie z.B. das in US2003/0183517 A1 erwähnte Polyhydroxy-3-amino-propyl)methacrylat schon ab 110°C nach kurzer Zeit schon Zersetzungserscheinungen. Folge solcher thermischen Zersetzung ist eine markante Braunfärbung und letztendlich eine vollständige Zersetzung und /oder ein Schrumpfen oder Auswaschen des Geles, was wiederum zu Unterbrechungen in der potentiometrischen und amperometrischen Messkette führen kann.

Ein weiterer Nachteil dieser siliziumfreien Gele ist, dass sie oft in Abhängigkeit der Umgebungsbedingungen (Lösungsmittel, Salzgehalt, pH etc.) quellen oder schrumpfen.

Eine weitere Klasse an Elektrolytgelen besteht aus siliziumhaltigen Gelen. So ist bekannt, dass Innenelektrolyte für die innere Ableitung von potentiometrischen Sensoren teilweise mit "fused silica" zu hochviskosen, physikalisch vernetzten Gelen stark verdickt werden, um Sensoren als "upside down"-Elektroden auch in umgekehrter Messposition einsetzen zu können, ohne dass der Elektrolyt wegläuft und so die potentiometrische / amperometrische Meßkette unterbricht. Solche Gele sind auch als Referenzelektrolyt bekannt. So verkauft Rosemount Analytical Elektroden, deren Referenzelektrolyt mit reinen Silikatgelen verdickt wurde. Als besonders vorteilhaft beschreibt Rosemount diese Gele, weil sie sich bei erhöhten Temperaturen nicht verflüssigen und entsprechend auch bei hohen Temperaturen eingesetzt werden können. Ähnliche Elektrolyte werden auch in US 2003/0178305 A1 (US 6,495,012 B1) beschrieben, wobei das "fused silica" lediglich als Verdickungsmittel für reduzierten Ausfluss des Referenzelektrolyten in einem bedruckten Referenzsystem beschrieben und verwendet wird.

Nachteilig an solchen reinen Silikatgelen ist deren Brüchigkeit. So kommt es insbesondere bei Temperaturzyklen mit großen Temperaturgradienten vor, dass solche Gele durch die thermische Expansion beim Aufheizen bzw. aufgrund des darauf folgenden Abkühlens beim Schrumpfen Risse bilden. Diese Risse wiederum können ebenfalls zu Messkettenunterbrechungen führen.

Eine dritte Art von Referenz-Hydrogelen sind sogenannte Makro-KompositMaterialien. Dies sind Hybridmaterialien, welche im makroskopischen Bereich z.B. durch Blenden von Polymeren mit Füllstoffen erhalten werden. Diese anorganischen Füllstoffe können kovalent, physikalisch über Van der Vaals-Kräfte oder Wasserstoffbrücken oder gar nicht mit dem organischen Teil des Materials verbunden sein. Im letzteren Falle führt dies zu größerer Unordnung und größerer Amorphheit im Material und in der Regel zu reduzierten Materialeigenschaften, die insbesondere bzgl. Temperaturstabilität und der mechanischen Festigkeit noch geringer sein können als die der einzelnen Reinmaterialien.

Bei physikalischer oder kovalenter Anbindung der anorganischen Phase an die organische Phase werden die Eigenschaften des Materials und insbesondere die Festigkeitseigenschaften nur geringfügig verbessert. Nichtsdestotrotz lassen sich die Materialeigenschaften der organischen Materialien und der anorganischen Materialien nicht wirklich mischen, da diese makroskopisch wie eine Kette mit verschiedenen Gliedern aufgebaut ist, deren Eigenschaft durch das schwächste Glied bestimmt wird.

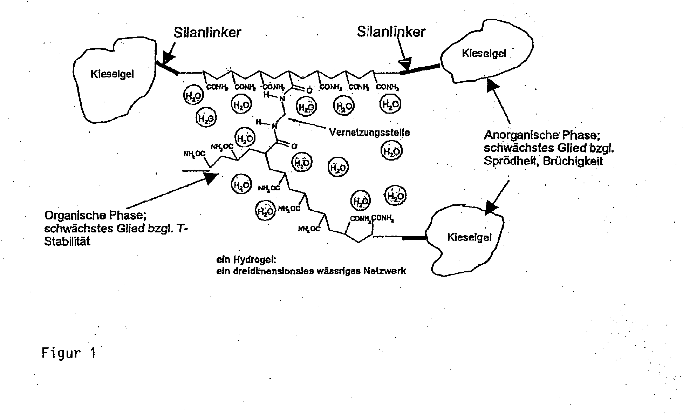

Ein Beispiel für ein Makro-Kompositmaterial ist in EP 1 124 132 A1 beschrieben, wobei das Kompositmaterial durch Polymerisation von Dimethylacrylamid in Anwesenheit von Silikagel (5-60 µm erhalten wird. Ein weiteres Beispiel ist, dass in US2003/0183517 A1 oder WO 2005/073704 A1 beschriebene Makro-Kompositmaterial, dem ebenfalls Silikagel und zusätzlich kurz vor der Polymerisation ein silyliertes Methacrylat, z.B. der Silanlinker (Trimethoxysilyl)-propylmethacrylat, zugesetzt wird, um eine Bindung sowohl zwischen dem organischen Gel und den Füllstoffen wie auch eine Bindung zwischen dem organischen Gel und dem umgebenden Elektrodenglasschaft zu erhalten. Dadurch ergeben sich Gele der in Abbildung 1 dargestellten Art, welche aus Blöcken steifer Silikathaltiger organischen Materials und Blöcken flexibler organischen Materials bestehen.

Ein zusätzlicher Nachteil des Silanlinkers (Trimethoxysilyl)propylmethacrylat ist, dass dieses Silylmethacrylat relativ hydrophob ist und in wässrigen Monomerlösungen als Silikonfettaugen obenauf schwimmt. Das Silylmethacrylat kann demnach nur in entsprechend geringer Menge in diese Art von Feststoffelektrolyten eingearbeitet werden, was für eine einfache Glasanbindungsfunktion des Gels am Elektrodenschaft, wie in WO2005/073704 A1 beschrieben, nicht aber für eine wesentliche Temperaturbeständigkeitserhöhung genügt. Um diesem Umstand Rechnung zu tragen, werden die Monomerlösungen, welche in die Elektroden eingezogen werden, zusätzlich stark dispergiert, um die Silylkomponente in dispergierter/emulgierter Form in der Lösung zu halten. Nichtsdestotrotz ist ein Eintrag von mehr als 0.5 mol-% an Silylalkylmethacrylat (im Verhältnis zur Gesamtmonomermenge) nicht möglich.

Die Temperaturstabilität dieser Gele ist gegenüber einem silikatfreien organischen Gel nur unwesentlich erhöht.

Die der vorliegenden Erfindung zugrunde liegende Aufgabe bestand somit darin, einen Elektrolyten bzw. eine Referenzelektrode bereitzustellen, mit denen die oben beschriebenen Nachteile des Standes der Technik minimiert oder beseitigt werden können. Insbesondere sollte die mangelnde Temperaturstabilität der bekannten organischen Referenzfestelektrolyte verbessert werden. Der Elektrolyt bzw. die Referenzelektrode sollen einerseits beständig gegen Verschmutzung sein, andererseits jedoch die Nachteile bekannter Polymerelektrolyte vermeiden. Insbesondere soll der Elektrolyt bzw. die Referenzelektrode auch in Messlösungen mit erhöhter Temperatur zwischen 130°C und 200°C noch funktionieren, ohne dass sich hierbei der Festelektrolyt zersetzt oder aufgrund seiner Sprödigkeit zerreißt.

Diese Aufgabe wird erfindungsgemäß gelöst durch Bereitstellung eines Polymer-Elektrolyten, umfassend ein Nano-Hybrid-Polymergel, das aus mindestens einem Polyol-umgeesterten Organosiloxan und organischen Monomeren zusammengesetzt ist und einen Wassergehalt von wenigstens 5 Gew.-%, bezogen auf das Gewicht des Geles aufweist. Die Polyol-umgeesterten Organosiloxane und die organischen Monomere werden hierin auch vereinfacht als Precursor (Vorläufermolekül) bezeichnet.

Es wurde festgestellt, dass ein solcher Polymer-Elektrolyt eine wesentlich verbesserte Temperaturstabilität aufweist. Die verbesserte Temperaturstabilität wird erfindungsgemäß dadurch erreicht, dass eine Kombination aus steifen polaren (umgeesterte Alkoxysilanen) und flexiblen polaren Monomereinheiten (mehrfachfunktionelle organische Monomere, umgeesterte Trialkylsilylalkylmethacrylate) zu einem Nano-Polymerhydrogel vernetzt werden.

Erfindungsgemäß wird ein Polymer-Elektrolyt bereitgestellt, welcher eine hohe Temperaturbeständigkeit, insbesondere auch bei Temperaturen > 100°C, mehr bevorzugt bei Temperaturen > 120°C, noch mehr bevorzugt bei Temperaturen > 130°C und am meisten bevorzugt bei Temperaturen >140°C aufweist. Es wurde weiterhin festgestellt, dass der erfindungsgemäße Polymer-Elektrolyt bis zu einer Temperatur von 200°C hitzestabil sein kann. Die Hitzestabilität wird erreicht durch ein Hybrid-Polymergel. Das Hybrid-Polymergel wird hierin auch als Nano-Hybridgel bezeichnet. Ein solches Hybrid-Polymergel wird gebildet aus umgeesterten Organosiloxanen und organischen Monomeren mit ein und / oder mehreren funktionellen Gruppen, die vernetzt werden. Die umgeesterten Organosiloxane können radikalisch vernetzbare Gruppen aufweisen.

Organosiloxane können auch als Organosilikate bezeichnet werden.

Die umgeesterten Organosiloxane sowie die damit zur Bildung der Hybrid-Polymergele umzusetzenden organischen Monomere werden hierin auch als Vorläufer oder als Precursor bezeichnet.

Die aus den jeweiligen Vorläufern oder Precursoren gebildeten Einheiten im Hybrid-Polymergel werden hierin als Komponenten bezeichnet. So ist die umgeesterte Organosilikat-Komponente aus umgeesterten Organosiloxanen bzw. Organosilikaten gebildet und die organische, insbesondere silikatfreie organische Komponente ist aus organischen Monomeren gebildet.

Bei den mit Polyol umgeesterten Organosiloxanen handelt es sich um Verbindungen, die wenigstens eine Hydroxygruppe, mehr bevorzugt wenigstens zwei Hydroxygruppen, noch mehr bevorzugt wenigstens drei Hydroxygruppen, besonders bevorzugt wenigstens vier Hydroxygruppen und am meisten bevorzugt, wenigstens fünf Hydroxygruppen aufweisen. Bevorzugt wird das Polyol umgeesterte Organosiloxan durch Umesterung eines Organosiloxans mit Polyolen, insbesondere mit polaren Polyolen, erhalten. Geeignete Polyole sind z.B. Ethylenglycol, Neopenthylglycol, Pentaeritritol, Pentaeritritolethoxylat, Pentaeritritolpropoxylat oder, besonders bevorzugt, mit Glycerin. Grundsätzlich kann die Umesterung mit jeder Verbindung erfolgen, die wenigstens zwei Hydroxygruppen aufweist. Es ist auch möglich, die Umesterung mit Verbindungen durchzuführen, die neben der Hydroxygruppe weitere funktionelle Gruppen aufweisen, wie beispielsweise Aminogruppen oder Thiolgruppen. Solche Polyole, die neben den Hydroxygruppen weitere funktionelle Gruppen aufweisen, werden hierin auch als Polyolderivate bezeichnet. Ein besonders bevorzugtes Beispiel für ein zur Umesterung eingesetztes Polyolderivat ist Tris(hydroxymethyl)-aminomethan.

Als weiteres Ausgangsmaterial zur Bildung des erfindungsgemäßen Nano-Hybridgels werden organische Monomere eingesetzt. Diese organischen Monomere sind insbesondere Silikat-frei und bevorzugt enthalten sie überhaupt kein Si. Bevorzugt enthalten die organischen Monomere ausschließlich Kohlenstoff, Wasserstoff, Stickstoff sowie Sauerstoff. Bei den organischen Monomeren handelt es sich bevorzugt um Verbindungen, die radikalisch vernetzbar sind, also insbesondere um Verbindungen, die eine C=C Doppelbindung aufweisen. Die organischen Monomere können einfach oder mehrfach funktionell radikalisch vernetzbar sein, was bedeutet, dass sie ein öder mehrere funktionelle Gruppen aufweisen können, die eine radikalische Vernetzung eingehen können. Bevorzugt sind auch vinylische oder allylische Verbindungen. Besonders bevorzugte Beispiele für Monomere sind N-substituierte Acrylamide und Methacrylate einschließlich Di- und Triacrylaten.

Durch die Gestaltung als Hybridmaterial können erfindungsgemäß die günstigen Eigenschaften der ein- oder mehrfach funktionellen Monomere, nämlich Elastizität und Formbarkeit, mit den Vorteilen der umgeesterten Organosiloxane, nämlich insbesondere hohe Festigkeit und Hochtemperaturstabilität, vereint werden.

Bevorzugt weist das im erfindungsgemäßen Polymer-Elektrolyten enthaltene Nano-Hybridgel bzw. das den erfindungsgemäßen Polymer-Elektrolyten bildende Nano-Hybridgel einen Anteil an umgeesterten Organosiloxan von ≥ 5 Gew.-%, insbesondere von ≥ 10 Gew.-%, mehr bevorzugt von ≥ 20 Gew.-%, noch mehr bevorzugt ≥ 30 Gew.-%, bezogen auf das Gesamtgewicht aller Precursoren, auf. Dies hat zur Folge, dass die umgeesterten Organosilikate im Nano-Hybridgel vorzugsweise ≥ 5 Gew.-%, insbesondere von ≥ 10 Gew.-%, mehr bevorzugt von ≥ 20 Gew.-%, noch mehr bevorzugt ≥ 30 Gew.-% des Nano-Hybridgels ausmachen. Es ist erfindungsgemäß aber auch möglich, noch größere Mengen an umgeesterten Organosilikaten einzubauen und insbesondere bis zu 95 Gew.-%, bevorzugt bis zu 90 Gew.-%, mehr bevorzugt bis zu 80 Gew.-% und noch mehr bevorzugt bis zu 70 Gew.-%

Der silikatfreie organische Anteil der Nano-Hybridgele beträgt entsprechend insbesondere ≥ 5 Gew.-%, insbesondere von ≥ 10 Gew.-%, mehr bevorzugt von ≥ 20 Gew.-%, noch mehr bevorzugt ≥ 30 Gew.-% und insbesondere bis zu 95 Gew.-%, bevorzugt bis zu 90 Gew.-%, mehr bevorzugt bis zu 80 Gew.-% und noch mehr bevorzugt bis zu 70 Gew.-% bezogen auf das Gesamtgewicht des Nano-Hybridgels. Eine solche Zusammensetzung wird insbesondere erhalten durch einen Anteil an silkatfreien organischen Precursoren von ≥ 5 Gew.-%, insbesondere von ≥ 10 Gew.-%, mehr bevorzugt von ≥ 20 Gew.-%, noch mehr bevorzugt ≥ 30 Gew.-% und insbesondere bis zu 95 Gew.-%, bevorzugt bis zu 90 Gew.-%, mehr bevorzugt bis zu 80 Gew.-% und noch mehr bevorzugt bis zu 70 Gew.-% bezogen auf das Gesamtgewicht der Precursoren.

Insbesondere beträgt das Gewichtsverhältnis an silikatfreien organischen Precursoren, beispielsweise organische Monomere zu umgeesterten Organosilikaten, 1:20 bis 20:1, bevorzugt 1:10 bis 10:1, mehr bevorzugt 3:7 bis 7:3. Die Temperaturstabilität und -festigkeit des resultierenden Gels steigt mit zunehmendem Anteil an umgeesterten Organosilikaten.

Im erfindungsgemäßen Polymer-Elektrolyten können die Hybrid-Polymergelbestandteile durch beliebige Wechselwirkungen miteinander verbunden sein. In einer Ausführungsform werden die umgeesterten Organosilikat-Komponenten und die silikatfreien flexiblen organischen Komponenten im Polymernetzwerk durch physikalische Wechselwirkung, beispielsweise durch Van der Waals-Wechselwirkungen oder Wasserstoffbrücken miteinander verbunden. Bevorzugt ist jedoch ein Hybrid-Polymergel, in dem die umgeesterten Organosilikate und die organischen Komponenten kovalent gebunden sind. Besonders bevorzugt ist ein Hybrid-Polymergel, in dem die umgeesterten Organosilikat-Komponenten und silikatfreien flexiblen organischen Komponenten im Polymernetzwerk sowie die umgeesterten Organosilikate und silikatfreien flexiblen organischen Komponenten untereinander kovalent miteinander verbunden sind. Insbesondere durch kovalente Bindung werden Materialien erhalten, deren mechanische und thermische Eigenschaften besonders stabil sind. Nanoverbundwerkstoffe werden insbesondere durch Umsetzung von umgeesterten Organosilikaten und silikatfreien organischen Precursoren erhalten, die jeweils eine Teilchengröße von < 300 nm, insbesondere eine Teilchengröße von < 200 nm aufweisen. Durch das Aneinanderfügen von Precursoren mit solch kleinen Dimensionen kann ein Hybridmaterial erhalten werden, in welchem die Komponenten wiederum im Nanomaßstab vorliegen. Geeignete Precursoren sind z.B. organische Präpolymere oder Oligomere kondensierter umgeesterter Organosilikate mit einem Molekulargewicht von ≤ 10000 g/mol, insbesondere ≤ 7000 g/mol. Nano-Hybridgele können aber auch durch Copolymerisation von organischen Monomeren und umgeesterten Organosiloxanmonomeren gebildet werden.

Durch direkte Copolymerisation von organischen Monomeren und umgeesterten Organosiloxanmonomeren wird ein Hybridmaterial gebildet, in dem die einzelnen Komponenten in besonders kleinen Dimensionen vorliegen. In einem Nano-Hybridgel liegen die jeweiligen Komponenten, also die umgeesterte Organosilikat-Komponente und die Silikat-freie organische Komponente bevorzugt jeweils im Nanomaßstab vor, also insbesondere mit einer Komponenten- oder Teilchengröße < 1000 nm, insbesondere ≤ 800 nm, bevorzugt ≤ 600 nm, noch mehr bevorzugt ≤ 400 nm und am meisten bevorzugt < 300 nm. Insbesondere durch Vereinigung der beiden Stoffklassen im Nanometermaßstab wird die gewünschte Eigenschaftskombination bei der Hybridisierung erhalten. In den erfindungsgemäßen besonders bevorzugten Nano-Hybridgelen liegen insbesondere ≥ 10 Gew.-%, mehr bevorzugt ≥ 30 Gew.-% und noch mehr bevorzugt ≥ 50 Gew.-%, insbesondere ≥ 70 Gew.-%, noch mehr bevorzugt ≥ 90 Gew.-%, und am meisten bevorzugt praktisch alle (≥ 99 Gew.-%) der Komponenten im Nanomaßstab vor. Dabei ist es insbesondere möglich, optisch transparente Gele zu erhalten.

Werden hingegen mikroskalig bis grobkörnige Silika-Partikel in organischen Materialien eingebaut, entstehen herkömmliche Kompositmaterialien (und nicht Nanokomposite), wie sie z.B. in der Dentaltechnik als Zahnfüllstoffe eingesetzt werden. So sind z.B. die in DE 3405431 A1 erwähnten Polyacrylamidfestelektrolyte klassische Kompositmaterialien, da dort grobkörnige Chromatographiegele (Silica-Xerogele mit Korngrößen im µm-Bereich) eingearbeitet werden. Diese Materialien weisen nicht die optimierten, vereinigten Eigenschaften auf, da das schwächste Glied im Material die Stoffeigenschaften und auch die Temperaturstabilität bestimmt (siehe Abbildung 1).

Weiterhin umfasst das erfindungsgemäße Hybrid-Polymergel, da es sich um ein Gel handelt, insbesondere um ein Hydrogel, einen gewissen Gehalt an Wasser, nämlich von wenigstens 5 Gew.-%, insbesondere von wenigstens 10 Gew.-%, noch mehr bevorzugt von wenigstens 30 Gew.-% und am meisten bevorzugt von wenigstens 50 Gew.-%, bezogen auf das Gewicht des Hybrid-Polymergels. Es ist möglich, dass das Hybrid-Polymergel einen Wassergehalt von bis zu 90 %, insbesondere bis zu 80 % und bevorzugt bis zu 70 % aufweist.

Besonders bevorzugt ist ein Wassergehalt von 60 bis 70 Gew.-%, insbesondere in Hinblick auf die Hydrophilie des Polymers, die Ethanolbeständigkeit, das Salzaufnahmevermögen und/oder das Salzrückhaltevermögen.

Bei den Nano-Hybridgelen der erfindungsgemäßen Polymer-Elektrolyte handelt es sich wie der Name es bereits sagt, um Gele, insbesondere um Hydrogele. Solche Gele weisen im Gleichgewichtszustand einen Wassergehalt von wenigstens 5 Gew.-% insbesondere von 10 bis 70 Gew.- % auf wodurch gegebenenfalls in Kombination mit einer Salzzugabe die zur Verwendung als Elektrolyt erforderliche Leitfähigkeit erzielt wird.

Um Gele mit einer ausreichend hohen Wasseraufnahmefähigkeit bereitzustellen, weisen die Komponenten der Hybrid-Polymergelmaterialien bevorzugt hydrophile Gruppen auf, die Wasser zurückhalten können. Solche bevorzugten hydrophilen Gruppen sind beispielsweise Hydroxygruppen.

Besonders bevorzugt werden mit hydrophilen Gruppen derivatisierte Precursoren (Vorläufermoleküle) eingesetzt, beispielsweise mit Glycerin derivatisierte Moleküle.

Das erfindungsgemäß eingesetzte Polyol, umgeesterte Organosiloxan oder Organosilikat kann beim Erhitzen das Polyol, wie zum Beispiel Glycerin abspalten, mit anderen Silikaten kondensieren oder/und eine radikalische Polymerisation mit silikatfreien organischen Monomeren eingehen.

Das Freisetzen von Polyolen sorgt zusätzlich für eine Erhöhung der Löslichkeit bzw. Benetzbarkeit der weniger polaren organischen Precursoren / Komponenten und eine Herabsetzung des Quelldrucks des Hybridgels. Der Quelldruck dieser Hybridgele ist wesentlich weniger abhängig von den Umgebungsbedingungen als der von Hybridgelen, die keine umgeesterten Organosiloxane enthalten. Der besonders geringe Quelldruck wird erfindungsgemäss insbesondere durch die hohe Vernetzung und den Anteil der Organosilikate erzielt.

Durch Kondensation mit anderen Silikaten, insbesondere mit weiteren umgeesterten Organosilikaten werden im Hybridgel Siloxanblöcke oder Siloxanoligomere gebildet. Durch Poylmerisation mit organischen Monomeren kommt es zur Bildung eines Hybridmaterials, nämlich der Verbindung von Organosiloxan-Materialien mit Silikat-freien organischen Monomeren. Der Einsatz mehrfach funktioneller organischer Monomere, wie zum Beispiel Dimethacrylaten, führt weiterhin zur Erhöhung der Vernetzungsdichte des Nano-Hybridgeles.

Besonders bevorzugte Hybrid-Polymergele für die Erfindung sowie deren Ausgangsmaterialien werden wie folgt beschrieben.

### Umgeesterte Organosiloxane:

In einer bevorzugten Ausführungsform wird zur Bildung des Hybrid-Polymergels ein Precursor der Formel (I):

Si(OR¹)₄

oder der Formel (II):

R²-Si(OR¹)₃

eingesetzt.

R¹ und R² stellen bei jedem Auftreten jeweils unabhängig einen Rest dar, welcher Wasserstoff darstellt oder 1-30 Kohlenwasserstoffatome sowie 0-30 Heteroatome, ausgewählt aus O, N und S, beispielsweise geradkettige oder verzweigte C₁₋₃₀-Kohlenwasserstoffe, umfasst, mit der Maßgabe, dass der Precursor und insbesondere wenigstens ein Rest R¹ oder R², insbesondere wenigstens ein Rest R¹ eine Hydroxy-Gruppierung umfasst. Bevorzugt weisen die Precursoren 1-20 Hydroxy- oder/und 1-20 Aminogruppen und insbesondere wenigstens zwei, mehr bevorzugt wenigstens drei und noch mehr bevorzugt wenigstens vier Hydroxygruppen auf.

R¹ und R² stellen bevorzugt jeweils unabhängig einen Rest dar, welcher 1 bis 20 C-Atome, insbesondere 3 bis 10 C-Atome und 0 bis 20, bevorzugt 0 bis 10, insbesondere 1 bis 5, mehr bevorzugt 2 bis 4 Heteroatome, ausgewählt aus O, N und S, umfasst.

Die Heteroatome können als Teil von Substituenten, z.B. als Hydroxy-, Amino- oder Thiolgruppen vorliegen und/oder als Teil des Grundgerüsts, z.B. als Ethergruppen.

Bei R¹ und R² handelt es sich bevorzugt um Kohlenwasserstoffreste, welche gegebenenfalls Heteroatome im Grundgerüst oder in Substituenten aufweisen können.

Zur Erhöhung der Hydrophilie und damit zur Verbesserung der Löslichkeit der Precursormoleküle können die Reste R¹ und R² jeweils unabhängig bevorzugt substituiert sein mit hydrophilen Resten, insbesondere mit Hydroxylgruppen. Besonders bevorzugt stellt R¹ einen Glyceridylrest dar (-CH₂-CH(OH)-CH₂OH).

Besonders bevorzugt werden Precursoren der Formel (II) eingesetzt.

Der Rest R² kann funktionalisiert sein, insbesondere mit funktionellen Gruppen, die eine kovalente Bindung an andere Precursoren erlauben und beispielsweise eine Doppelbindung (z.B. Acrylatgruppen, Methacrylat, Diene, Vinylgruppen), Hydroxidgruppen, primäre und sekundäre Amingruppen oder Thiolgruppen aufweisen.

R² ist bevorzugt ein funktioneller Rest, der für weitere Derivatisierungen genutzt werden kann, um das Molekül noch hydrophiler und wasserlöslicher zu gestalten. Bevorzugt enthält R² auch funktionellen Gruppen, die eine kovalente Bindung an unterschiedliche Precursoren erlaubt. Besonders bevorzugt enthält R² eine radikalisch vernetzbare Gruppe, insbesondere eine Alkyl-, Acrylat- oder/und Methacrylatgruppe, besonders bevorzugt eine Methacrylatgruppe.

Bevorzugt werden Alkoxysilane eingesetzt, wie Tetraalkoxysilane Si(OR¹)₄ z.B. Tetraethoxysilane (TEOS) oder R² Si(OR¹)₃. Diese Stoffe werden bevorzugt eingesetzt in sogenannten Solgel Reaktionen und bilden bei Anwesenheit von protischen Lösungsmitteln Silikat-Gele aus. Das einfachste Beispiel solch eines Silanes ist das Wasserglas, dessen Reste R¹ und R² Wasserstoff sind. R² kann ferner eine funktionelle Gruppe (z.B. Allylgruppe oder Acrylatgruppe) enthalten, um polymerisierbare oder derivatisierbare Funktionalität ins Silikatgel zu bringen. Grundsätzlich können R¹ und R² die oben angegebene Bedeutung besitzen.

Besonders bevorzugt handelt es sich bei den mit Polyol umgeesterten Organosiloxanen um Trialkoxysilylalkylmethacrylat. Die Alkoxyreste sowie die Alkylreste weisen dabei jeweils unabhängig bevorzugt 1 bis 20, insbesondere 1 bis 10 C-Atome auf. Die Alkoxygruppen im Trialkyloxysilylalkylmethacrylat sind weiterhin zudem bevorzugt mit wenigstens einer, mehr bevorzugt mit wenigstens zwei Hydroxygruppen substituiert (Tri(hydroxyalkoxy)silylalkylmethacrylat). Der Anteil an Trialkoxylsilylalkylmethacrylat beträgt vorzugsweise ≥ 5 Gew.-%, mehr bevorzugt ≥ 10 Gew.-%, mehr bevorzugt ≥ 20 Gew.-% und am meisten bevorzugt ≥ 50 Gew.-%, bezogen auf alle Bestandteile und Ausgangsstoffe, die zur Herstellung des Polymerhybridgels eingesetzt werden.

### Siliziumfreie organische Precursoren

Geeignete siliziumfreie organische Precursoren sind grundsätzlich alle Monomere, welche aus organischen Materialien bestehen, insbesondere Kohlenwasserstoffe, welche gegebenenfalls Heteroatome, insbesondere O, N, S oder P aufweisen können. Bevorzugt weisen diese organischen Vorläufer ein Molekulargewicht von < 10000 g/mol auf, wodurch im Nano-Hybridgel eine Nanoskaligkeit erhalten werden kann. Bevorzugt handelt es sich bei den organischen Precursoren um Moleküle, die auch zur Herstellung von organischen Hydrogelen Verwendung finden. Geeignete organische Precursoren sind beispielsweise Acrylamide oder/und Methacrylate, die dann zu größeren organischen Einheiten bzw. copolymerisiert werden können. Bevorzugt handelt es sich bei den Acrylamiden oder/und Methacrylaten um N-substituierte Verbindungen, noch mehr bevorzugt um N,N-Dimethylacrylamid, N-(Trishydroxymethyl)-N-methylacrylamid, N-Hydroxymethylacrylamid, N-Hydroxyethylacrylamid, N-Glycerinacrylamid oder Kombinationen davon. Weiterhin bevorzugt sind organische Vorläufer, die hydrophile Gruppen, insbesondere Hydroxylgruppen und noch mehr bevorzugt mindestens zwei Hydroxylgruppen aufweisen. Ein Beispiel für ein solches Precursormolekül ist 2,3-Dihydroxypropylmethacrylat.

Bevorzugt wird erfindungsgemäß wenigstens ein organisches Monomer eingesetzt, welches zweifach oder mehrfach funktionell ist (also zwei oder mehr radikalisch vernetzbare Gruppen aufweist) und somit zu einer Vernetzung des Hybridgels führt. Dieser Vernetzer wird bevorzugt in einem Anteil von mindestens 2 Gew.-%, mehr bevorzugt ≥ 5 Gew.-% und noch mehr bevorzugt ≥ 10 Gew.-%, bezogen auf das Gesamtgewicht aller Precursoren, eingesetzt.

Besonders bevorzugt wird als organischer Precursor mindestens ein Monomer ausgewählt aus N-substituierten Acrylamiden eingesetzt, welche 1 bis 20 Kohlenstoffatome und 1 bis 20 Hydroxygruppen oder 1 bis 20 Hydroxy- und Aminogruppen aufweisen.

Der Substituent am Stickstoff ist vorzugsweise ein Rest mit 1 bis 10 Kohlenstoffatomen und 1 bis 20 Sauerstoff- oder/und Stickstoffatomen. Bevorzugt ist der Rest ein C₁-C₁₀ Alkylrest, welcher mit 0 bis 20, insbesondere mit 1 bis 10 Hydroxy- oder/und Aminogruppen substituiert sein kann.

Weiterhin bevorzugt werden als organische Monomere Methacrylate oder/und Acrylamide eingesetzt.

Am meisten bevorzugt wird das erfindungsgemäße Nano-Hybridgel gebildet aus
a) mindestens einem umgeesterten Organosiloxan der Formel SiOR¹₄ und/ oder SiOR¹₃R², wobei R¹ jeweils unabhängig 1 bis 20 Kohlenstoffatome und 1 bis 20 Hydroxy- oder 1 bis 20 Amingruppen aufweist und R² eine organische Gruppe mit 1 bis 20 Kohlenstoffatomen und wenigstens einer C=C Doppelbindung darstellt,
   und
b) aus mindestens einem Monomer ausgewählt aus N-substituierten Acrylamiden, die 1-20 Kohlenstoffatomes und 1-20 Hydroxygruppen oder Hydroxy und Amingruppen aufweisen können
   und
c) mono- oder mehrfachfunktionellen Methacrylaten oder Acrylamiden
   und einen Wassergehalt von wenigstens 5 Gew.-% und einen Organosiloxananteil von wenigstens 5 Gew.-% besitzt, bezogen auf das Gewicht des Nano-Hybridgels.

Erfindungsgemäß geeignete Nano-Hybride können auf verschiedene Arten hergestellt werden.

Ein bevorzugter Herstellungsweg ist die *in-situ* Polykondensation von umgeesterten Organosiloxanen in Gegenwart von Trialkoxysiloxanfunktionalisierten organische Precursoren. Der organische Precursor kann beispielsweise durch Copolymerisation von organischen Monomeren mit einem silyl-funktionalisierten organischen Monomer, wie z.B. Triglyceridyl(oxymethyl)propylsiliyl-methacrylat erhalten werden. Bei den Organosiloxanen handelt es sich bevorzugt um umgeesterte Alkoxysiloxane oder Wasserglas. Die Umsetzung erfolgt bevorzugt gemäß folgender Gleichung:

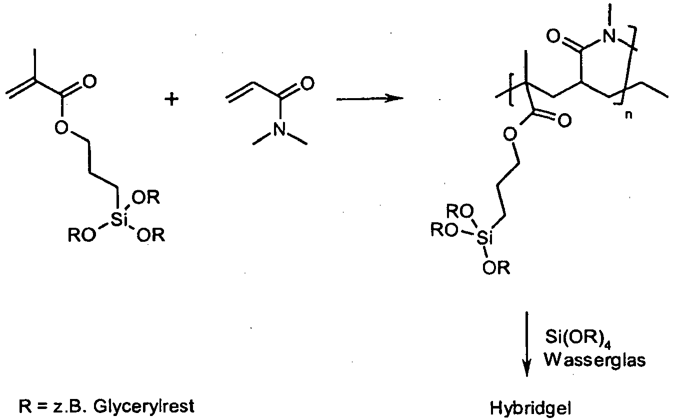

Als organische Precursoren können sowohl hydrophile als auch hydrophobe Monomere eingesetzt werden. Bevorzugt werden die organischen Bestandteile ausreichend hydrophil gewählt, so dass die entstehenden Hydrogele einen Wassergehalt von ≥ 5 Gew.-% aufweisen. Ein Beispiel für eine solche Herstellungsweise ist im Folgenden dargestellt:

### Strukturformeln

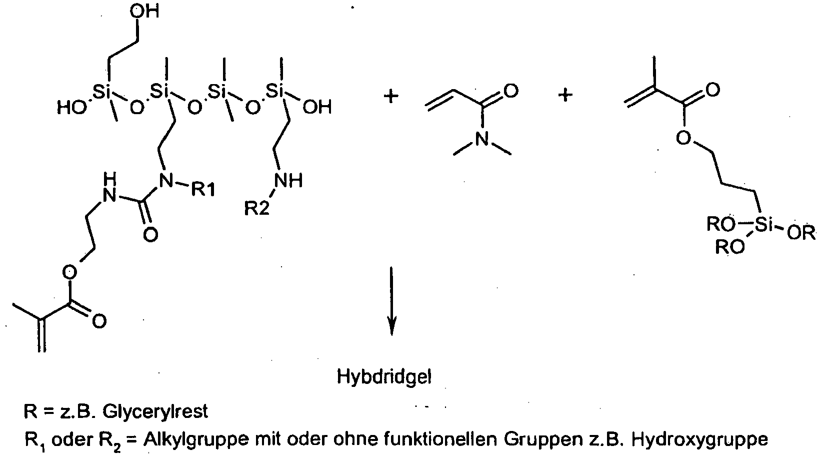

Der erfindungsgemäße Polymer-Elektrolyt umfasst vorzugsweise weiterhin wenigsten ein Salz, insbesondere ausgewählt aus der Gruppe Kaliumchlorid, Natriumchlorid, Lithiumchlorid, Kaliumnitrat, Natriumformiat, Lithiumacetat, Lithiumsulfat, Ammoniumchlorid, Methylammoniumchlorid, Dimethylammoniumchlorid, Trimethylammoniumchlorid sowie Mischungen davon. Besonders bevorzugt umfasst der Polymer-Elektrolyt Kaliumchlorid. Die Salzkonzentration und insbesondere die Kaliumchlorid Konzentration im erfindungsgemäßen Polymer-Elektrolyten beträgt, bezogen auf die im Hybrid-Polymergel enthaltenen Wassermenge, bevorzugt 0.5 bis 5 mol/l insbesondere 1 bis 4 mol/l und insbesondere 3 mol/l.

Der Polymer-Elektrolyt kann zusätzlich ein organischen Lösungsmittel umfassen, beispielsweise ausgewählt aus der Gruppe bestehend aus Glycerin, Pentaerythritol, Pentaerythritol ethoxylate, Pentaerythritol propoxylate Ethylenglykol, Methanol, Ethanol, n-Propanol, Isopropanol, Aceton, sowie Mischungen davon.

Alternativ enthält der Polymer-Elektrolyt ein Gemisch eines organischen Lösungsmittels und einer wässrigen Lösung eines Salzes, wobei das Salz insbesondere als Suspension vorliegt.

Ein weiterer Gegenstand der vorliegenden Erfindung ist die Verwendung des oben beschriebenen Polymer-Elektrolyten in einer elektrochemischen Halbzelle. Der Polymer-Elektrolyt wird insbesondere als Festelektrolyt in einer elektrochemischen Halbzelle eingesetzt. Die elektrochemische Halbzelle ist vorzugsweise eine Halbzelle, welche für Sensoranwendungen geeignet und vorgesehen ist.

Die Erfindung betrifft auch eine elektrochemische Halbzelle, welche einen Polymer-Elektrolyten wie oben beschrieben umfasst. Bevorzugt handelt es sich um eine Referenz-Halbzelle, insbesondere eine Referenzhalbzelle, welche für Sensoranwendungen eingesetzt werden kann. Die Sensor-Halbzelle umfasst neben dem erfindungsgemäßen Polymerelektrolyten vorzugsweise eine Ableitung zweiter Art, beispielsweise ein Ag/AgCl-System. Besonders bevorzugt umfasst der Polymerelektrolyt in einer solchen Referenz-Halbzelle neben dem Nano-Hybridgel ein Salz, insbesondere KCI, wobei die Salzkonzentration so eingestellt ist, dass die Referenz-Halbzelle ein konstantes Potential aufweist. Besonders bevorzugt weist sie ein Salzgehalt von 0.3 bis 10 mol/l auf.

Ein weiterer Gegenstand der vorliegenden Erfindung ist eine Referenzelektrode, die einen Polymer-Elektrolyten wie oben beschrieben umfasst.

Eine solche Referenzelektrode findet insbesondere Verwendung in einer elektrochemischen Halbzelle, bei der es sich um eine Referenzhalbzelle handelt. Aufgrund der Geschaffenheiten des erfindungsgemäßen Elektrolyten kann eine solche Halbzelle eine offene Flüssigkeitsverbindung mit dem umgebenden Medium aufweisen. Eine solche elektrochemische Halbzelle kann insbesondere als Komponente in einem potenziometrischen oder amperometrischen Sensor eingesetzt werden.

Die Erfindung betrifft einen Polymerelektrolyten, der z.B. Bestandteil einer elektrochemischen Referenzelektrode ist und bei potentiometrischen und amperometrischen Sensoren eingesetzt werden kann. Der Polymerelektrolyt umfasst ein Hydrogel das über einen großen pH-Bereich stabil und gegenüber organischen Lösungsmitteln beständig ist. Zusätzlich ist dieses Hydrogel stabil bei erhöhten Temperaturen bis 200°C. Erzielt wird diese Temperaturstabilität durch Hybridisierung organischer Hydrogele mit umgeesterten Organosiloxane Precursormolekülen zu Hybridmaterialien. Ein hoher Vernetzeranteil sowie das Anteil von Organosilikat in nanoskaliger Form sorgt für einen geringen Dampfdruck und eine hohe thermische Stabilität dieser Gele.

**Figur 1** zeigt ein Kompositmaterial bestehend aus Kieselgel als steife Ketteneinheit und flexiblen organischen Bereichen welche mit Silanlinker miteinander verknüpft sind.

### Beispiel:

### Ein Nano-Hybridgel kann wie folgt zusammengesetzt sein:

| | |
|---|---|
| Tetraglyceridyloxysilan | 39.3g |
| Triglyceridylpropylmethacrylat: | 2.5 g |
| Hydroxyethylmethacrylat: | 13.2 g |
| Ethyltriethoxymethacrylat: | 15.0 g |
| Butyldimethacrylat: | 30.0 g |
| Deionisiertes Wasser: | 70.0 g |
| Dimethylacrylamid: | 15.0 g |
| Kaliumchlorid: | 12.0 g |
| Glycerin: | 48.0 g |

Lösen der Substanzen in Glycerin und Wasser. Die Polymerisation mit Tetramethylethylendiamin und Kaliumperoxydisulfatlösung bei 40°C führte zu einem festen Nano-Hybridgel. Bei Applikation eines genügenden Gegendruckes ist das Nano-Hybridgel bis 200°C ohne sichtliche Zersetzung einsetzbar.

## Patentansprüche

1. Polymer-Elektrolyt für elektrochemische Halbzellen, umfassend ein Nano-Hybridgel,
**dadurch gekennzeichnet,**
**dass** das Nano-Hybridgel aus mindestens einem Polyol umgeesterten Organosiloxan und aus mindestens einem Monomer, insbesondere ausgewählt aus N-substituierten Acrylamiden oder/und Methacrylaten gebildet ist und einen Wassergehalt von wenigstens 5 Gew.-% aufweist, bezogen auf das Gewicht des Nano-Hybridgels.

2. Polymer-Elektrolyt, umfassend ein Nano-Hybridgel nach Anspruch 1,
**dadurch gekennzeichnet,**
**dass** eines der Polyol umgeesterten Organosiloxane die Struktur R²-Si(OR¹)₃ aufweist, wobei
R¹ eine aus einer Umesterung mit einem Polyol stammenden Rest darstellt und
R² einen organischen Rest darstellt.

3. Polymer-Elektrolyt, umfassend ein Nano-Hybridgel nach Anspruch 1,
**dadurch gekennzeichnet,**
**dass** eines der umgeesterten Organosiloxane die Struktur Si(OR¹)₄ aufweist, wobei R¹ einen aus einer Umesterung mit einem Polyol stammenden Rest darstellt.

4. Polymer-Elektrolyt umfassend ein Nano-Hybridgel nach Anspruch 2 oder 3,
**dadurch gekennzeichnet,**
**dass** R¹ und R² jeweils unabhängig einen Rest darstellen, welcher Wasserstoff ist oder 1 bis 30 C-Atome sowie 0 bis 30 Heteroatome, ausgewählt aus O, N oder S umfasst mit der Maßgabe, dass wenigstens ein Rest R¹ eine Hydroxy-Gruppierung umfasst.

5. Polymer-Elektrolyt umfassend ein Nano-Hybridgel nach einem der vorhergehenden Ansprüche,
**dadurch gekennzeichnet,**
**dass** das Nano-Hybridgel einen Gehalt an Trialkyloxysilylalkylmethacrylsäureester oder/und an Tetraorthoalkylsilikat aufweist.

6. Polymer-Elektrolyt, umfassend ein Nano-Hybridgel nach einem der Ansprüche 1 bis 5,
**dadurch gekennzeichnet,**
**dass** es Trialkyloxysilylalkylmethacrylsäureester und/oder Tetraorthoalkylsilikat umfasst, gebildet durch Umesterung mit polaren Polyolen, wie zum Beispiel Ethylenglykol, Neopentylglykol, Pentaerythritol, Pentaerythritolethoxylat, Pentaerythritolpropoxylat, besonders bevorzugt Glycerin, oder mit Polyolderivaten sowie Mischungen der genannten Polyole und/oder Polyolderivate.

7. Polymer-Elektrolyt, umfassend ein Nano-Hybridgel nach einem der Ansprüche 1 bis 6,
**dadurch gekennzeichnet,**
**dass** das Gel mono- oder/und mehrfach funktionelle Monomere aufweist, wobei bevorzugt Dimethylacrylamid als monofunktionelles Monomer eingesetzt wird.

8. Polymer-Elektrolyt umfassend ein Nano-Hybridgel nach einem der vorhergehenden Ansprüche,
**dadurch gekennzeichnet,**
**dass** das Nano-Hybridgel zusammengesetzt ist aus
a) mindestens einem umgeesterten Organosiloxan der Formel SiOR¹₄ und/ oder SiOR¹₃R², wobei R¹ jeweils unabhängig 1 bis 20 Kohlenstoffatome und 1 bis 20 Hydroxy- oder 1 bis 20 Amingruppen aufweist und R² eine organische Gruppe mit 1 bis 20 Kohlenstoffatomen und wenigstens einer C=C Doppelbindung darstellt,
und
b) aus mindestens einem Monomer ausgewählt aus N-substituierten Acrylamiden, die 1-20 Kohlenstoffatomes und 1-20 Hydroxygruppen oder Hydroxy und Amingruppen aufweisen können
und
c) mono- oder mehrfachfunktionellen Methacrylaten oder Acrylamiden
und einen Wassergehalt von wenigstens 5 Gew.-% und einen Organosiloxananteil von wenigstens 5 Gew.-% besitzt, bezogen auf das Gewicht des Nano-Hybridgels.

9. Polymer-Elektrolyt, umfassend ein Nano-Hybridgel nach Anspruch 8,
**dadurch gekennzeichnet,**
**dass** eines der umgeesterten Organosiloxane die Struktur R²-Si(OR¹)₃ aufweist, wobei R¹ Polyolyl- oder Polyolderivate mit sekundären oder primären Aminen oder Thiol-Gruppen sein können und R² eine Allyl-, Acrylat- oder Methacrylatgruppe enthalten kann.

10. Polymer-Elektrolyt, umfassend ein Nano-Hybridgel nach einem der vorhergehenden Ansprüche,
**dadurch gekennzeichnet,**
**dass** er weiterhin wenigstens ein Salz umfasst.

11. Polymer-Elektrolyt, umfassend ein Nano-Hybridgel nach Anspruch 10,
**dadurch gekennzeichnet,**
**dass** das Salz ausgewählt ist aus der Gruppe Kaliumchlorid, Natriumchlorid, Lithiumchlorid, Kaliumnitrat, Natriumformiat, Lithiumacetat, Lithiumsulfat, Ammoniumchlorid, Methylammoniumchlorid, Dimethylammoniumchlorid, Trimethylammoniumchlorid sowie Mischungen davon.

12. Polymer-Elektrolyt, umfassend ein Nano-Hybridgel nach einem der Ansprüche 10 oder 11,
**dadurch gekennzeichnet,**
**dass** das Salz als Suspension vorliegt.

13. Polymer-Elektrolyt, umfassend ein Nano-Hybridgel nach einem der vorhergehenden Ansprüche,
**dadurch gekennzeichnet,**
**dass** er zusätzlich ein organisches Lösungsmittel umfasst.

14. Polymer-Elektrolyt, umfassend ein Nano-Hybridgel nach Anspruch 13,
**dadurch gekennzeichnet,**
**dass** das organische Lösungsmittel ausgewählt ist aus der Gruppe bestehend aus Glycerin, Ethylenglykol, Methanol, Ethanol, n-Propanol, Isopropanol, Aceton, Pentaerythritol, Pentaerythritolethoxylat, Pentaerythritolpropoxylat sowie Mischungen davon.

15. Referenzelektrode, enthaltend einen Polymer-Elektrolyten, umfassend ein Nano-Hybridgel nach einem der Ansprüche 1 bis 14.

16. Elektrochemische Halbzelle,
**dadurch gekennzeichnet,**
**dass** sie einen Polymer-Elektrolyten nach einem der Ansprüche 1 bis 14 umfasst.

17. Elektrochemische Halbzelle nach Anspruch 16,
**dadurch gekennzeichnet,**
**dass** es sich um eine Referenz-Halbzelle handelt.

18. Halbzelle nach Anspruch 16 oder 17,
**dadurch gekennzeichnet,**
**dass** sie eine offene Flüssigkeitsverbindung zwischen dem Polymer-Elektrolyten und dem umgebendem Medium aufweist.

19. Verwendung eines Polymer-Elektrolyten nach einem der Ansprüche 1 bis 14 als Elektrolyt in einer elektrochemischen Halbzelle.

20. Verwendung einer elektrochemischen Halbzelle nach einem der Ansprüche 16 bis 18 als Komponente in einem potenziometrischen oder amperometrischen Sensor.

## Claims

1. Polymer electrolyte for electrochemical half-cells, comprising a nanohybrid gel, **characterised in that** the nanohybrid gel is formed from at least one polyol-transesterified organosiloxane and from at least one monomer, in particular selected from N-substituted acrylamides and/or methacrylates, and has a water content of at least 5 wt.%, based on the weight of the nanohybrid gel.

2. Polymer electrolyte, comprising a nanohybrid gel according to claim 1, **characterised in that** one of the polyol-transesterified organosiloxanes has the structure R²-Si(OR¹)₃, in which R¹ is a group originating from a transesterification with a polyol and R² is an organic group.

3. Polymer electrolyte, comprising a nanohybrid gel according to claim 1, **characterised in that** one of the transesterified organosiloxanes has the structure Si(OR¹)₄, in which R¹ is a group originating from a transesterification with a polyol.

4. Polymer electrolyte comprising a nanohybrid gel according to either claim 2 or claim 3, **characterised in that** R¹and R² are each independently a group which is hydrogen or comprises 1 to 30 C atoms and 0 to 30 heteroatoms, selected from O, N or S, having the feature that at least one group R¹ comprises a hydroxyl group.

5. Polymer electrolyte comprising a nanohybrid gel according to any of the preceding claims, **characterised in that** the nanohybrid gel has a trialkoxy silyl alkyl methacrylic acid ester and/or a tetra ortho alkyl silicate content.

6. Polymer electrolyte comprising a nanohybrid gel according to any of claims 1 to 5, **characterised in that** said gel comprises trialkoxy silyl alkyl methacrylic acid ester and/or tetra ortho alkyl silicate, formed by transesterification with polar polyols, such as ethylene glycol, neopentyl glycol, pentaerythritol, pentaerythritol ethoxylate, pentaerythritol propoxylate, particularly preferably glycerine, or with polyol derivatives and mixtures of the stated polyols and/or polyol derivatives.

7. Polymer electrolyte comprising a nanohybrid gel according to any of claims 1 to 6, **characterised in that** said gel comprises mono- and/or polyfunctional monomers, dimethylacrylamide preferably being used as a monofunctional monomer.

8. Polymer electrolyte comprising a nanohybrid gel according to any of the preceding claims, **characterised in that** the nanohybrid gel is composed of:
a) at least one transesterified organosiloxane of the formula SiOR¹₄ and/or SiOR¹₃R², in each case independently, R¹ comprising 1 to 20 carbon atoms and 1 to 20 hydroxyl- or 1 to 20 amine groups and R² being an organic group having 1 to 20 carbon atoms and at least one C=C double bond,
and
b) at least one monomer selected from N-substituted acrylamides which may comprise 1-20 carbon atoms and 1-20 hydroxyl groups or hydroxyl and amine groups,
and
c) mono- or polyfunctional methacrylates or acrylamides,
and has a water content of at least 5 wt.% and an organosiloxane proportion of at least 5 wt.%, based on the weight of the nanohybrid gel.

9. Polymer electrolyte comprising a nanohybrid gel according to claim 8, **characterised in that** one of the transesterified organosiloxanes has the structure R²-Si(OR¹)₃, in which R¹ may be polyolyl- or polyol derivatives having secondary or primary amines or thiol groups and R² may contain an allyl-, acrylate-, or methacrylate group.

10. Polymer electrolyte comprising a nanohybrid gel according to any of the preceding claims, **characterised in that** said electrolyte further comprises at least one salt.

11. Polymer electrolyte comprising a nanohybrid gel according to claim 10, **characterised in that** the salt is selected from the group consisting of potassium chloride, sodium chloride, lithium chloride, potassium nitrate, sodium formate, lithium acetate, lithium sulfate, ammonium chloride, methylammonium chloride, dimethylammonium chloride, trimethylammonium chloride, and mixtures thereof.

12. Polymer electrolyte comprising a nanohybrid gel according to either claim 10 or claim 11, **characterised in that** the salt is present as a suspension.

13. Polymer electrolyte comprising a nanohybrid gel according to any of the preceding claims, **characterised in that** that said electrolyte additionally comprises an organic solvent.

14. Polymer electrolyte comprising a nanohybrid gel according claim 13, **characterised in that** the organic solvent is selected from the group consisting of glycerine, ethylene glycol, methanol, ethanol, n-propanol, isopropanol, acetone, pentaerythritol, pentaerythritol ethoxylate, pentaerythritol propoxylate, and mixtures thereof.

15. Reference electrode, containing a polymer electrolyte, comprising a nanohybrid gel according to any of claims 1 to 14.

16. Electrochemical half-cell, **characterised in that** said half-cell comprises a polymer electrolyte according to any of claims 1 to 14.

17. Electrochemical half-cell according to claim 16, **characterised in that** said half-cell is a reference half-cell.

18. Half-cell according to either claim 16 or claim 17, **characterised in that** said half-cell comprises an open fluidic connection between the polymer electrolyte and the surrounding medium.

19. Use of a polymer electrolyte according to any of claims 1 to 14 as electrolyte in an electrochemical half-cell.

20. Use of an electrochemical half-cell according to any of claims 16 to 18 as a component in a potentiometric or amperometric sensor.

## Revendications

1. Polymère électrolyte pour des demi-cellules électrochimiques, comprenant un gel nanohybride
**caractérisé en ce**
**que** le gel nanohybride est formé à partir d'au moins un polyol d'organosiloxanes transestérifiés et à partir d'au moins un monomère, choisi en particulier parmi les acrylamides N-substitués et/ou les méthacrylates, et possède une teneur en eau d'au moins 5 % en poids par rapport au poids du gel nanohybride.

2. Polymère électrolyte comprenant un gel nanohybride selon la revendication 1,
**caractérisé en ce**
**qu'**un des polyols d'organosiloxanes transestérifiés présente la structure R²-Si(OR¹)₃, dans laquelle
R¹ représente un radical provenant d'une transestérification avec un polyol et R² représente un radical organique.

3. Polymère électrolyte comprenant un gel nanohybride selon la revendication 1,
**caractérisé en ce**
**qu'**un des organosiloxanes transestérifiés présente la structure Si(OR¹)₄, dans laquelle R¹ représente un radical provenant d'une transestérification avec un polyol.

4. Polymère électrolyte comprenant un gel nanohybride selon la revendication 2 ou 3,
**caractérisé en ce**
**que** R¹ et R² représentent chacun indépendamment un radical, qui est l'hydrogène ou qui comprend 1 à 30 atomes de C, ainsi que 0 à 30 hétéroatomes choisis parmi O, N ou S, à condition qu'au moins un radical R¹ comprenne un groupe hydroxyle.

5. Polymère électrolyte comprenant un gel nanohybride selon l'une des revendications précédentes,
**caractérisé en ce**
**que** le gel nanohybride présente un contenu en ester d'acide trialkyloxysilylalkylméthacrylique et/ou en silicate de tétraorthoalkyle.

6. Polymère électrolyte comprenant un gel nanohybride selon l'une des revendications 1 à 5,
**caractérisé en ce**
**qu'**il comprend un ester d'acide trialkyloxysilylalkylméthacrylique et/ou un silicate de tétraorthoalkyle, formé par transestérification avec des polyols polaires tels que par exemple l'éthylèneglycol, le néopentylglycol, le pentaérythritol, l'éthoxylate de pentaérythritol, le propoxylate de pentaérythritol, avec une préférence particulière, la glycérine, ou avec des dérivés de polyols ainsi que des mélanges des polyols cités et/ou des dérivés de polyols.

7. Polymère électrolyte comprenant un gel nanohybride selon l'une des revendications 1 à 6,
**caractérisé en ce**
**que** le gel présente des monomères mono- et/ou polyfonctionnels, le diméthylacrylamide étant mis en oeuvre de préférence comme monomère monofonctionnel.

8. Polymère électrolyte comprenant un gel nanohybride selon l'une des revendications précédentes,
**caractérisé en ce**
**que** le gel nanohybride est composé
a) d'au moins un organosiloxane transestérifié de la formule SiOR¹₄ et/ou SiOR¹₃R 2, dans laquelle R¹ représente chaque fois indépendamment 1 à 20 atomes de carbone et 1 à 20 groupes hydroxyle ou 1 à 20 groupes amine, et R² représente un groupe organique comportant 1 à 20 atomes de carbone et au moins une double liaison C=C,
et
b) d'au moins un monomère choisi parmi les acrylamides N-substitués, qui peuvent présenter 1 à 20 atomes de carbone et 1 à 20 groupes hydroxyle ou groupes hydroxyle et amine
et
c) de méthacrylates ou d'acrylamides mono- ou polyfonctionnels et possède une teneur en eau d'au moins 5 % en poids et une proportion d'organosiloxane d'au moins 5 % en poids, par rapport au poids du gel nanohybride.

9. Polymère électrolyte comprenant un gel nanohybride selon la revendication 8,
**caractérisé en ce**
**que** l'un des organosiloxanes transestérifiés présente la structure R²-Si(OR¹)₃, dans laquelle les R¹ peuvent être des dérivés de polyolyl ou de polyol avec des amines secondaires ou primaires ou des groupes thiol, et R² peut contenir un groupe allyle, acrylate ou méthacrylate.

10. Polymère électrolyte comprenant un gel nanohybride selon l'une des revendications précédentes,
**caractérisé en ce**
**qu'**il comprend en outre au moins un sel.

11. Polymère électrolyte comprenant un gel nanohybride selon la revendication 10,
**caractérisé en ce**
**que** le sel est choisi parmi le groupe constitué du chlorure de potassium, chlorure de sodium, chlorure de lithium, nitrate de potassium, formiate de sodium, acétate de lithium, sulfate de lithium, chlorure d'ammonium, chlorure de méthylammonium, chlorure de diméthylammonium, chlorure de triméthylammonium et des mélanges de ceux-ci.

12. Polymère électrolyte comprenant un gel nanohybride selon l'une des revendications 10 ou 11,
**caractérisé en ce**
**que** le sel est présent sous la forme d'une suspension.

13. Polymère électrolyte comprenant un gel nanohybride selon l'une des revendications précédentes,
**caractérisé en ce**
**qu'**il comprend en outre un solvant organique.

14. Polymère électrolyte comprenant un gel nanohybride selon la revendication 13,
**caractérisé en ce**
**que** le solvant organique est choisi parmi le groupe constitué de glycérine, éthylèneglycol, méthanol, éthanol, n-propanol, isopropanol, acétone, pentaérythritol, éthoxylate de pentaérythritol, propoxylate de pentaérythritol et des mélanges de ceux-ci.

15. Électrode de référence contenant un polymère électrolyte comprenant un gel nanohybride selon l'une des revendications 1 à 14.

16. Demi-cellule électrochimique,
**caractérisée en ce**
**qu'**elle comprend un polymère électrolyte selon l'une des revendications 1 à 14.

17. Demi-cellule électrochimique selon la revendication 16, **caractérisée en ce**
**qu'**il s'agit d'une demi-cellule de référence.

18. Demi-cellule selon la revendication 16 ou 17,
**caractérisée en ce**
**qu'**elle présente une liaison fluidique ouverte entre le polymère électrolyte et le milieu environnant.

19. Utilisation d'un polymère électrolyte selon l'une des revendications 1 à 14 en tant qu'électrolyte dans une demi-cellule électrochimique.

20. Utilisation d'une demi-cellule électrochimique selon l'une des revendications 16 à 18 en tant que composant d'un capteur potentiométrique ou ampérométrique.
